# EUROPEAN PATENT APPLICATION

(11) **EP 4 007 315 A1**
(43) Date of publication of application: **01.06.2022**
(21) Application number: 20843283.1
(22) Date of filing: 29.05.2020
(51) Int. Cl.: H04W 4/029

(54) **DEVICE POSITIONING METHOD, TERMINAL, SERVER, AND STORAGE MEDIUM**

(30) Priority: 23.07.2019 CN 201910668153
(71) Applicant: Xi'an Zhongxing New Software Co., Ltd., Shaanxi 710114 (CN)
(72) Inventor: GAO, Shiying, Shenzhen, Guangdong 518057 (CN)
(74) Representative: Ricker, Mathias
(86) International application number: PCT/CN2020/093369
(87) International publication number: WO 2021/012792

(57) **Abstract**

Provided are a device positioning method, a terminal, a server and a storage medium. The device positioning method includes the following steps: after a target device loses contact, a master device sends help-seeking information to a server; after receiving the help-seeking information, the server sends an assistance positioning instruction to an assistance terminal, so that the assistance terminal is instructed to scan for a surrounding device, and determines whether scanned identification information is matched with identification information in the assistance positioning instruction; if the scanned identification information is matched with the identification information in the assistance positioning instruction, the assistance terminal sends positioning information of the assistance terminal at a scan success time to the master device.

## Description

This application claims priority to Chinese Patent Application No. 201910668153.6 filed with the China National Intellectual Property Administration (CNIPA) on Jul. 23, 2019, the disclosure of which is incorporated herein by reference in its entirety.

### TECHNICAL FIELD

The present disclosure relates to the field of the Internet of Things (IoT), for example, to a device positioning method, a terminal, a server and a storage medium.

### BACKGROUND

With the improvement of living conditions and the development of the Internet of Everything (IoE) technology, the Internet of Things (IoT) has begun to be applied to many aspects of people's life. For example, a common smart watch for kids, a pet tracker and the like can position the real-time position of a kid or a pet and report the real-time position to a remote server, and the remote server will send the real-time position reported by the smart watch for kids or the pet tracker to a mobile phone and other terminal devices of a user. In this way, if a kid or a pet is lost, the user can know the real-time position reported by the smart watch for kids or the pet tracker through the mobile phone or a tablet computer of the user, so that the loss of the kid or the pet is prevented, and the impact of the loss on the family is prevented.

However, if the remote server or the tracker (the smart watch for kids or the pet tracker) is abnormal, the tracker will not normally report the real-time position of the tracker itself to the remote server. Naturally, terminals of the user cannot acquire the position of the tracker and thus lose contact with the tracker, which brings a huge impact to the family.

### SUMMARY

The present disclosure provides a device positioning method, a terminal, a server and a storage medium, which are used for solving the problem that in the related art, a tracker cannot report a real-time position of the tracker to a remote server due to the fault of the tracker or the problem on the remote server side, causing the tracker to lose contact with a user terminal and affecting the experience of the user.

A device positioning method is provided and includes steps described below.

A master device sends help-seeking information to a server, where the help-seeking information is used for triggering the server to send an assistance positioning instruction to an assistance terminal, such that the assistance terminal is instructed to scan for a target device associated with the master device.

The master device acquires positioning information of the assistance terminal at a scan success time, where the scan success time is a time when the target device is scanned by the assistance terminal according to the assistance positioning instruction.

A device positioning method is further provided and includes steps described below.

A server receives help-seeking information sent by a master device.

The server sends an assistance positioning instruction to an assistance terminal, where the assistance positioning instruction includes identification information of a target device associated with the master device, and the assistance positioning instruction is configured to instruct the assistance terminal to scan for the target device and send positioning information of the assistance terminal at a time when the target device is scanned by the assistance terminal to the master device.

A device positioning method is further provided and includes steps described below.

An assistance terminal receives an assistance positioning instruction sent by a server, where the assistance positioning instruction includes identification information of a target device associated with a master device.

The assistance terminal scans for a surrounding device, and matches scanned identification information with the identification information of the target device.

In response to matching being successful, the assistance terminal positions a current position of the assistance terminal to obtain positioning information.

The assistance terminal sends the positioning information to the master device.

A terminal is further provided. The terminal includes a first processor, a first memory and a first communication bus.

The first communication bus is configured to implement connection and communication between the first processor and the first memory.

The first processor is configured to execute a first device positioning program stored in the first memory to implement steps of the preceding device positioning method of the master device side; or the first processor is configured to execute a second device positioning program stored in the first memory to implement steps of the preceding device positioning method of the assistance terminal side.

A server is further provided. The server includes a second processor, a second memory and a second communication bus.

The second communication bus is configured to implement connection and communication between the second processor and the second memory.

The second processor is configured to execute a third device positioning program stored in the second memory to implement steps of the device positioning method of the server side.

A storage medium is further provided. The storage medium stores at least one of a first device positioning program, a second device positioning program or a third device positioning program, where the first device positioning program is capable of being executed by one or more processors to implement steps of the device positioning method of the master device side; the second device positioning program is capable of being executed by one or more processors to implement steps of the device positioning method of the server side; and the third device positioning program is capable of being executed by one or more processors to implement steps of the device positioning method of the assistance terminal side.

### BRIEF DESCRIPTION OF DRAWINGS

FIG. 1 is an interaction flowchart of a device positioning method according to embodiment one of the present disclosure;
FIG. 2 is a flowchart illustrating that a server determines an assistance scan range according to embodiment one of the present disclosure;
FIG. 3 is a schematic view of an interactive interface of an assistance terminal according to embodiment one of the present disclosure;
FIG. 4 is a flowchart illustrating that an assistance terminal acquires an association contact according to embodiment one of the present disclosure;
FIG. 5 is a schematic view of a display interface through which a master device displays a position of a target device to a user by using a map according to embodiment one of the present disclosure;
FIG. 6 is an interaction flowchart of a device positioning method according to embodiment two of the present disclosure;
FIG. 7 is an interaction flowchart of a device positioning method according to embodiment three of the present disclosure;
FIG. 8 is a schematic diagram illustrating a hardware structure of a terminal according to embodiment four of the present disclosure; and
FIG. 9 is a schematic diagram showing a hardware structure of a server according to embodiment four of the present disclosure.

### DETAILED DESCRIPTION

Embodiments of the present disclosure are described below in conjunction with the drawings and specific implementations.

### Embodiment one

To achieve real-time tracking of a kid or a pet, a tracker is provided in the related art. For example, Bluetooth connection is established between a mobile phone and a tracker. Bluetooth communication is a kind of short-distance communication manner, so that once the Bluetooth disconnects, it is considered that the mobile phone and the tracker are far away from each other. At this time, the tracker turns on a positioning mode, acquires the position of the tracker through positioning manners such as the Global Positioning System (GPS) or the Wireless-Fidelity (WiFi), and then periodically reports the acquired positioning information to a remote server through the Narrow Band Internet of Things (NB-IoT). Then, the remote server sends the positioning information reported by the tracker to the mobile phone side, so that the mobile phone can display the real-time position of the tracker to the owner of the tracker in the form of a map through an application (APP) of the mobile phone. If the owner of the tracker needs to find the tracker on the spot, the owner of the tracker can approach the tracker according to the position displayed by the APP of the mobile phone. In this process, as the distance shortens, the previously disconnected Bluetooth will be reconnected. In this way, the user can position the position and the movement trajectory of the kid or pet carrying the tracker anytime and anywhere, and thus the safety of the child or the pet is ensured.

However, this positioning solution has problems described below.
1. If the tracker is lost indoors, it is difficult for the tracker to receive enough satellite signals to achieve GPS positioning due to the barrier of multiple walls. At this time, if positioning is performed via WiFi base stations, a large deviation exists, resulting in a serious deviation in the positioning of the tracker. Therefore, in this case, even if the tracker normally reports the position to the remote server, the mobile phone still cannot accurately position the position of the tracker.
2. The NB-IoT network deployment is incomplete or a subscriber identity module (SIM) card of the tracker cannot normally register with the NB-IoT network, resulting in that the tracker cannot normally report the position.
3. The remote server is abnormal. For example, a port of the remote server is abnormal, resulting in that the tracker cannot normally report data, and the mobile phone side cannot acquire the position of the tracker.

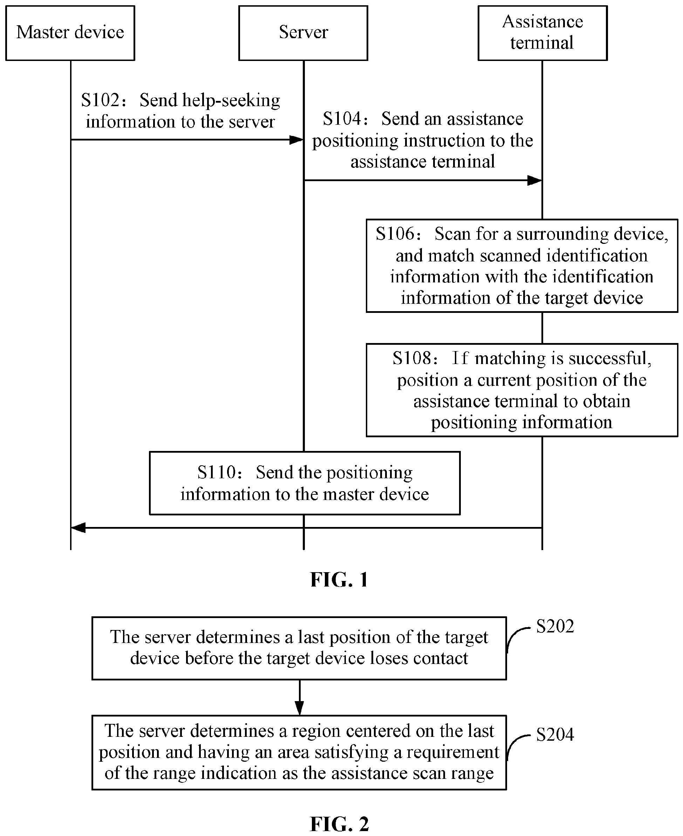

In view of the preceding problems, the embodiment provides a device positioning method. Reference may be made to the interaction flowchart shown in FIG. 1.

In step S102, a master device sends help-seeking information to a server.

In the embodiment, the master device is a user equipment on a monitoring side, while a target device is a device on a monitored side. For example, the master device may be a mobile phone, a tablet computer, a smart watch and the like of a guardian, and the target device may be a smart watch worn by a kid, a pet tracker worn by a pet, etc. The master device and the target device are associated with each other. The master device establishes an association relationship between the master device and the target device, the target device also establishes an association relationship between the target device and the master device, and the server in the cloud also knows the association relationship between the master device and the target device. The association relationship between the master device and the target device may be characterized by a mapping relationship between identification information of the master device and identification information of the target device.

In the case where the target device can normally report positioning information of the target device to the server in the cloud, the master device may receive the positioning information of the target device sent by the server, so as to know the current position of the target device. However, if the target device cannot normally report the positioning information of the target device to the server due to the target device itself or the server, the master device naturally cannot acquire the position of the target device, which will cause the target device and the master device to lose contact. In the embodiment, the state that the master device cannot normally acquire the positioning information of the target device is referred to as a contact-loss state.

For the master device, the master device may determine whether the target device loses contact according to a preset contact-loss determination condition. For example, if the time interval between the current time and the time when the positioning information of the target device is acquired at last has reached a preset duration T, the master device may determine that the target device is in a contact-loss state. In other words, if the master device receives no positioning information of the target device sent by the server within a consecutive preset duration, it may be determined that the target device loses contact. In some other examples of the embodiment, the master device may also determine that the target device is currently in the contact-loss state according to the instructions of a user. For example, if the user cannot query the real-time position of a pet tracker through a mobile phone of the user, the user may determine that the pet tracker loses contact, and at this time the user may indicate to the mobile phone that the pet tracker is lost through operating instructions.

After the master device determines that the target device loses contact, the master device may send the help-seeking information to the server, and request the server side to assist in positioning the target device through the help-seeking information. The master device sends the help-seeking information to the server to request the server to help the master device in finding and positioning the target device by activating an assistance terminal. Therefore, the master device needs to ensure that the server can determine which target device is currently to be positioned after receiving the help-seeking information.

In some examples of the embodiment, master devices are in one-to-one correspondence with target devices. Therefore, in this case, as long as the server stores a mapping relationship between a master device and a target device after the master device is associated with the target device, when the server receives the help-seeking information sent by the master device, the server may query the mapping relationship according to the sending end of the help-seeking information, so as to determine the identification information of the target device uniquely corresponding to the master device, and then determine which target device is currently to be positioned.

In some other scenarios, since one master device may be associated with multiple devices simultaneously, the server cannot directly determine the currently to-be-positioned target device according to the sending end of the help-seeking information. Therefore, in order that the server can determine the target device after receiving the help-seeking information, the help-seeking information sent by the master device may include the identification information of the target device, so that the server can determine which device is currently to be positioned according to the content of the help-seeking information. In some examples, the identification information carried in the help-seeking information may be the only one piece of information that can distinguish the target device from all devices, such as the media access control (MAC) address of the target device. In some other examples, the identification information carried in the help-seeking information is the only one piece of information that can distinguish the target device from all devices associated with the master device. For example, in an example, for a master device A, devices with identifiers (IDs) respectively of 01, 02 and 03 associated with the master device A exist; and for a master device B, devices with IDs respectively of 01, 02 and 03 associated with the master device B also exist. Optionally, the mapping relationship table below is stored in the server.

**Table 1**

| Master device | Associated device |
|---|---|
| Master device A | Associated device 01 |
| | Associated device 02 |
| | Associated device 03 |
| Master device B | Associated device 01 |
| | Associated device 02 |
| | Associated device 03 |

In this case, if the associated device with the ID of 02 of the master device A loses contact, when the master device A sends help-seeking information to the server, the help-seeking information may carry the ID of 02. Although the target device cannot be determined from all associated devices according to the ID, the server can still determine which device is the target device because the server can determine which associated device of the master device currently loses contact according to the sending end of the help-seeking information.

In some examples of the embodiment, the help-seeking information sent by the master device to the server may also carry a range indication. The range indication may characterize a range within which the master device expects to perform a target-range scan, that is, the range indication can indicate the size of the area of an assistance scan range. For example, in some examples of the embodiment, the master device indicates that r = 2 km to the server in the help-seeking information, which means that the assistance scan range expected by the master device is a circular region with a radius of 2 km. If the master device indicates that d = 2 km to the server in the help-seeking information, it means that the assistance scan range expected by the master device is a circular region with a radius of 1 km. If the master device indicates that l = 2 km to the server in the help-seeking information, it means that the assistance scan range expected by the master device is a square region with a side length of 2 km.

In some examples of the embodiment, the help-seeking information sent by the master device further includes an urgency degree indication, and the urgency degree indication may characterize the urgency degree of the master device currently positioning the target device. The master device may preferentially arrange the assistance terminal according to the urgency degree to scan for a target terminal corresponding to the help-seeking information whose urgency degree indication characterizes a relatively high urgency degree. For example, in an example of the embodiment, the server receives two pieces of help-seeking information simultaneously. One piece of help-seeking information carries the urgency degree indication of level 1, and the other piece of help-seeking information carries the urgency degree indication of level 3. Since level 1 characterizes the highest urgency degree, the first piece of help-seeking information will be first responded and processed by the server.

In an embodiment, a piece of help-seeking information may also include both the range indication and the urgency degree indication.

In some examples of the embodiment, the master device may also set in the help-seeking information a scan period and a scan interval of the assistance terminal when the assistance terminal scans for the target device.

In step S104, the server sends an assistance positioning instruction to the assistance terminal.

After the server receives the help-seeking information sent by the master device, the server may directly query a stored mapping relationship to find out an associated device corresponding to the master device as the target device. This case requires one-to-one correspondence between master devices and associated devices of the master devices in the mapping relationship stored on the server side. If the mapping relationship does not satisfy this condition, the help-seeking information received by the server must carry the identification information of the target device. For example, the help-seeking information includes the MAC address, or the MAC address and ID of the target device, so that after receiving the help-seeking information, the server can determine the target device according to the identification information carried in the help-seeking information.

In some examples of the embodiment, the server may configure all terminals as assistance terminals and send the assistance positioning instruction to the assistance terminals. However, in some other examples of the embodiment, after receiving the help-seeking information and determining the to-be-positioned target device, the server needs to determine an assistance scan range. The so-called assistance scan range refers to the geographic range of the assistance terminal that needs to be activated. When an article loses contact, the surroundings centered on the position where the article is seen for the last time are generally searched. The same is true for scanning for a target device that loses contact. The server may determine the positioning information reported by the target device for the last time to determine the assistance scan range. Reference may be made to the flowchart shown in FIG. 2 which illustrates that the server determines an assistance scan range.

In step S202, the server determines a last position of the target device before the target device loses contact.

The target device reports the positioning information of the target device to the server before losing contact, so that the server may send the positioning information to the master device. The positioning information reported by the target device may be reported periodically or non-periodically. In any case, the server may query the positioning information reported by the target device for the last time, and determine the last position of the target device before the target device loses contact according to the positioning information reported for the last time.

In step S204, the server determines a region centered on the last position and having an area satisfying a requirement of the range indication as the assistance scan range.

After determining the last position of the target device before the target device loses contact, the server may configure the position as the center of the assistance scan range. In some examples, if the help-seeking information includes the range indication, the server may determine a region having an area satisfying the range indication as the assistance scan range. However, in some other examples, the help-seeking information may include no range indication, and the server directly determines the assistance scan range according to a default scan range of the server and the last position of the target device before the target device loses contact.

After determining the assistance scan range, the server may configure all terminals currently within the assistance scan range as assistance terminals, and then send the assistance positioning instruction to these assistance terminals. The assistance terminal must also support the assistance scan function. Otherwise, even if one assistance terminal is located within the assistance scan range, the one assistance terminal will not serve as an assistance terminal. For example, in some examples of the embodiment, the assistance terminal is a terminal installed with an APP capable of assisting in positioning.

The assistance positioning instruction may cause the assistance terminal to scan for a surrounding device and determine whether the scanned device is the target device. Therefore, the identification information of the target device is included in the assistance positioning instruction, so that after a device is scanned by the assistance terminal, the assistance terminal may determine whether the scanned device is the target device according to the identification information in the assistance positioning instruction.

In step S106, the assistance terminal scans for a surrounding device, and matches scanned identification information with the identification information of the target device.

After receiving the assistance positioning instruction, the assistance terminal may scan for a surrounding device according to the assistance positioning instruction. In some examples of the embodiment, the server may indicate to the assistance terminal at least one of a scan period, a scan range or a scan manner through the assistance positioning instruction, so that the assistance terminal may determine a scan strategy of the assistance terminal according to the assistance positioning instruction.

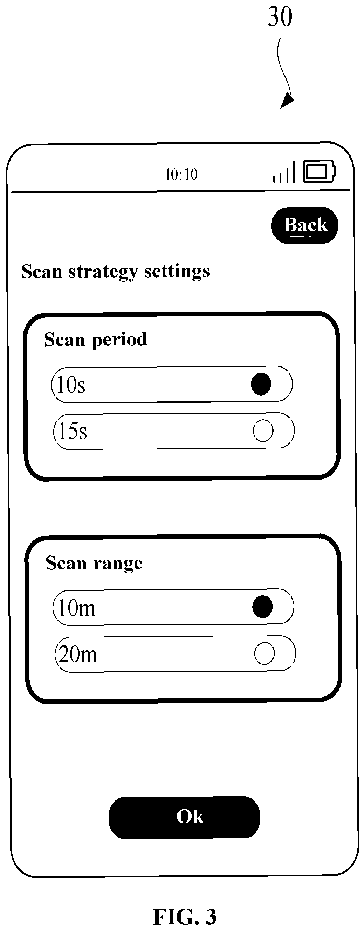

In some other examples of the embodiment, the assistance positioning instruction includes no indication information such as the scan period, the scan range and the scan manner, and each assistance terminal may determine the scan strategy by itself. For example, in some examples of the embodiment, the user of the assistance terminal may specify to the terminal of the user a scan strategy for helping other devices in scanning for a contact-loss device. For example, reference may be made to the schematic view of an interactive interface of a terminal shown in FIG. 3. FIG. 3 illustrates that the user may set how the terminal 30 of the user performs scanning.

In the embodiment, after the target device is associated with the master device, the target device may use Bluetooth Low Energy (BLE) technology to work. BLE is a kind of personal area network technology designed and sold by the Bluetooth Special Interest Group (SIG), and is to be used in emerging applications in fields of healthcare, sports and fitness, beacons, security and home entertainment. BLE aims to significantly reduce power consumption and cost while maintaining the same communication range compared with classic Bluetooth technology. In this case, the target device can be scanned by other Bluetooth devices, which is equivalent to that the target device exposes identification information such as the ID or MAC address of the target device, so that the Bluetooth device that finds the target device acquires the identification information of the target device.

In some other examples of the embodiment, the assistance device may also use other feasible short-distance scan manners to scan for devices surrounding the assistance device, where the scan manner is not limited to the Bluetooth manner.

If a device is scanned by the assistance terminal, the assistance terminal may acquire the identification information of the device, and then compare the acquired identification information with the identification information in the assistance positioning instruction and determine whether the two match each other. For example, in some examples of the embodiment, after a device is scanned by the assistance terminal, the assistance terminal may first compare the ID of the device with the ID carried in the assistance positioning instruction. If the two are consistent with each other, the assistance terminal will match the MAC address of the scanned device with the MAC address in the assistance positioning instruction. If the two successfully match each other, the assistance terminal may determine that the assistance terminal has successfully scanned the target device.

In step S108, if the match is successful, the assistance terminal positions a current position of the assistance terminal to obtain positioning information.

In the embodiment, if the assistance terminal determines that the assistance terminal has successfully scanned the target device that loses contact with the master device by matching the identification information of the scanned device with the identification information in the assistance positioning instruction, the assistance terminal may configure this time as a scan success time. When the assistance terminal determines the current time as the scan success time, the assistance terminal may position the current position of the assistance terminal, to obtain the positioning information at the scan success time.

In an embodiment, since the assistance terminal finds the target device through a short-distance scan manner such as Bluetooth, the position of the assistance terminal at the scan success time is very close to the position of the target device at the same time, and the positioning information of the assistance terminal at the scan success time can basically characterize the position of the target device at the scan success time.

In step S110, the assistance terminal sends the positioning information to the master device.

After obtaining the positioning information at the scan success time, the assistance terminal may send the positioning information of the assistance terminal at the scan success time to the master device. Two manners causing the assistance terminal to send the positioning information to the master device are provided below.

### Manner one

The assistance terminal sends the positioning information to the master device through the server. In this manner, after the assistance terminal acquires the positioning information at the scan success time, the assistance terminal may send the positioning information to the server, and after the server acquires the positioning information sent by the assistance terminal, the server may send the positioning information to the master device. After the server receives the positioning information that can characterize the position of the contact-loss target device, the server may actively send the positioning information to the master device, or may send the positioning information to the master device after receiving a request from the master device. For example, in an example of the embodiment, the master device may periodically send inquiry information to the server. If the server has acquired the positioning information sent by the assistance terminal, the server may feed back the positioning information to the master device as a response message to the inquiry information.

### Manner two

The assistance terminal directly sends the positioning information to the master device. In this manner, the assistance terminal may acquire an association contact of the master device, and then directly send the positioning information of the assistance terminal at the scan success time to the master device according to the association contact without through forwarding by the server. The so-called association contact of the master device side may include at least one of a telephone number of the master device side, an email address of the master device side or the like. The assistance terminal may acquire the association contact of the master device side from the server, or may acquire the association contact of the master device from the target device.

The solution in which the assistance terminal acquires the association contact of the master device side from the target device side is first introduced. When the target device and the master device are associated with each other, the master device may send the association contact of the master device to the target device, so that the target device stores the association contact. After the target device is successfully scanned by the assistance terminal, the assistance terminal may communicate with the target device and request the target device to send the association contact of the master device side stored in the target device to the assistance terminal. After receiving the request from the assistance terminal, the target device may send the association contact of the master device side to the assistance terminal.

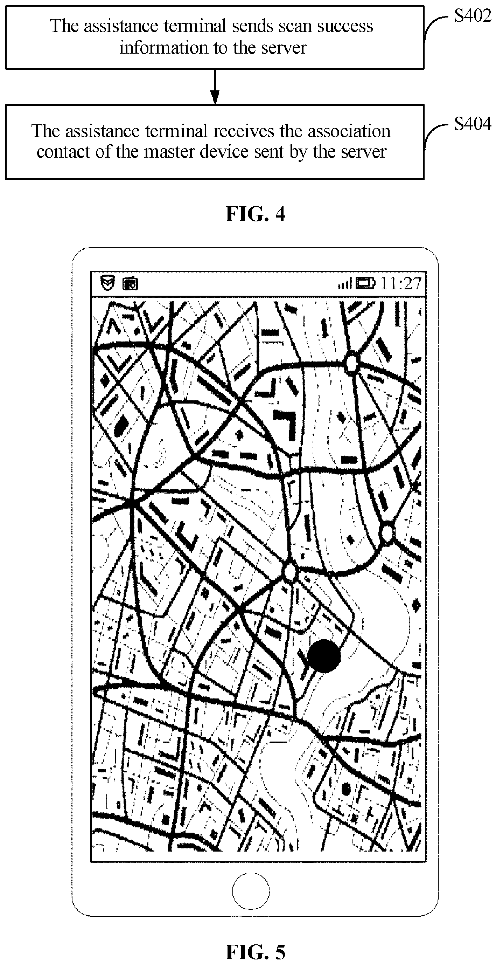

Another way in which the assistance terminal acquires the association contact of the master device side is further introduced herein. The assistance terminal may acquire the association contact of the master device side from the server. In an example of the embodiment, reference may be made to the flowchart in which an assistance terminal acquires an association contact shown in FIG. 4.

In step S402, the assistance terminal sends scan success information to the server.

In this example, after the target device is successfully scanned by the assistance terminal, the assistance terminal may send scan success information to the server, and the scan success information may characterize that the target device has been successfully scanned by the assistance terminal.

In step S404, the assistance terminal receives the association contact of the master device sent by the server.

After the server receives the scan success information sent by the assistance terminal, it can be determined that the target device has been currently successfully scanned by the assistance terminal. Therefore, the assistance terminal needs to send positioning information to the master device, and thus the server may send the association contact of the master device to the assistance terminal. After the master device is associated with the target device, the master device may establish a mapping relationship between the identification information of the master device and the identification information of the target device, and send the mapping relationship to the server. Moreover, the master device may also send the association contact of the master device to the server.

The mapping relationship between the identification information of the master device and the identification information of the target device may also be sent to the server after being established by the target device. However, in comparison, the master device generally has more sufficient processing resources and communication resources to establish and send the mapping relationship.

In an embodiment, the assistance terminal may also acquire the association contact before finding the target device. For example, when the server sends the assistance positioning instruction to multiple assistance terminals, the association contact of the master device may be carried in the assistance positioning instruction. However, considering a relatively large number of assistance terminals, if the server notifies the assistance terminals of the association contact in this manner, it is easy to cause a serious leakage of the association contact of the master device. Therefore, generally, the server should send the association contact to the assistance terminal after determining that the target device is successfully scanned by the assistance terminal. In this way, the sending of the association contact of the master device side is purposeful, and the probability of the leakage and exploitation of the association contact of the master device side is reduced.

No matter how the assistance terminal acquires the association contact of the master device side, after acquiring the association contact, the assistance terminal may send the positioning information that can characterize the current position of the target device to the master device side, so that the user on the master device side can know the current position of the target device and find the target device.

In an embodiment, if the assistance terminal acquires the association contact of the master device side from the target device side and sends the positioning information of the assistance terminal at the scan success time to the master device side, through this manner, the problem of the target device losing contact with the master device due to the fault of the server can be solved.

In some examples of the embodiment, after the assistance terminal acquires the positioning information of the assistance terminal at the scan success time, the assistance terminal may send the positioning information to the server and directly send the positioning information to the master device. That is, the assistance terminal sends the positioning information to the master device side by simultaneously using the preceding two manners.

For the master device, the master device may receive the positioning information of the assistance terminal at the scan success time directly sent by the assistance terminal, or receive the positioning information of the assistance terminal at the scan success time sent by the assistance terminal through the server. After obtaining the positioning information that can characterize the current position of the target device, the master device may display the position corresponding to the positioning information to the user on a map as shown in FIG. 5, so that the owner of the target device, that is, the user of the device, can know the current approximate position of the target device to move to find the target device.

The embodiments of the present disclosure provide a device positioning method, a terminal, a server and a storage medium. After a target device associated with a master device loses contact, the master device may send help-seeking information to a server, and the help-seeking information instructs the server to send an assistance positioning instruction to an assistance terminal to cause the assistance terminal to scan for the target device that is currently in a contact-loss state. After receiving the help-seeking information, the server may send the assistance positioning instruction to the assistance terminal within an assistance scan range. After receiving the assistance positioning instruction, the assistance terminal scans for a surrounding device, acquires identification information of the surrounding device, and matches the identification information of the surrounding device with identification information of the target device in the assistance positioning instruction. If matching is successful, the assistance terminal sends positioning information of the assistance terminal at a scan success time to the master device. Since the positioning information of the assistance terminal at the scan success time can basically characterize the position of the target device at the scan success time, when the assistance terminal sends the positioning information to the master device, a user on the master device side can know the position of the target device, so that the contact-loss state of the target device can be ended. In this way, the stability of the process of the master device tracking the position of the target device is improved, the personal and property safety of the target device side is improved, and the experience of the user is improved.

According to the device positioning method provided by the embodiment, after the target device loses contact with the master device, the master device may send the help-seeking information to the server, then the server initiates the flow of finding and positioning the target device, and the assistance terminal close to the last position of the target device before the target device loses contact is utilized to scan for and position the target device, so as to find the target device. According to the device positioning solution, the positioning flow of the target device after the target device loses contact can be improved, the property and personal safety of the target device side can be improved, the impact of the contact loss of the target device on the user on the master device side can be reduced, and the experience of the user can be improved.

### Embodiment two

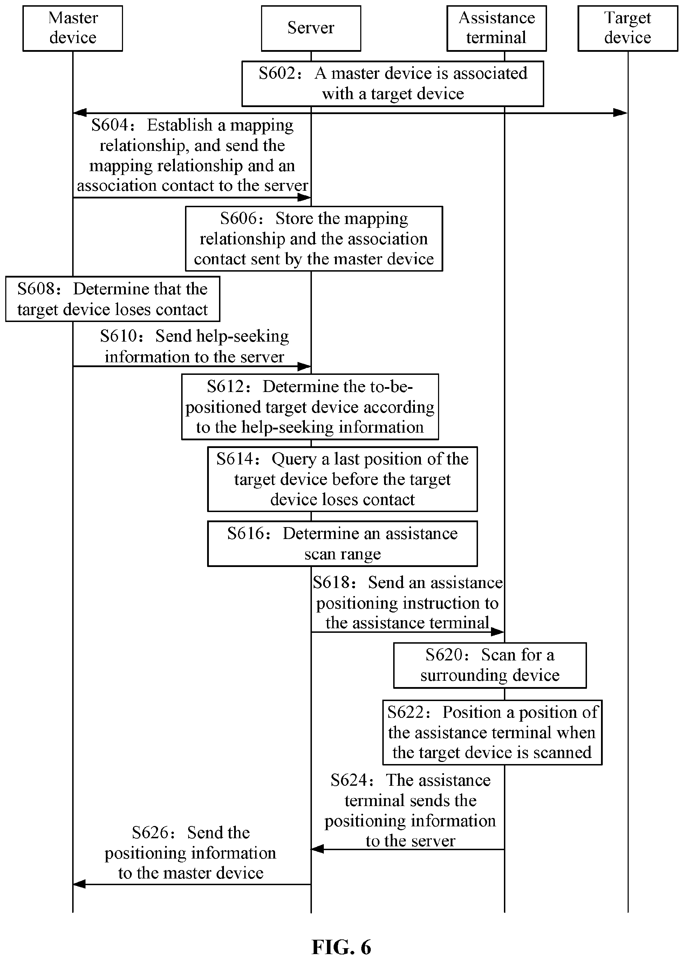

The embodiment will continue to describe the device positioning method provided by the preceding embodiment in conjunction with examples. Reference may be made to the flowchart of a device positioning solution shown in FIG. 6.

In step S602, a master device is associated with a target device.

A device positioning APP may be downloaded on the master device and is registered with. After the registration is successful, the master device selects a target device that needs to be bound to. If the master device and the target device are associated with each other through Bluetooth communication, the user should turn on the target device before, or at the same time as, the master device searches for the target device, and let the SIM card of the target device register with the NB-IoT network. On the other hand, the user should turn on the Bluetooth function of the target device, so that the target device can be searched for by the master device.

If the target device has not been associated with the master device previously, the target device may broadcast a first binding message through Bluetooth Low Energy, and the first binding message may carry identification information such as the ID and MAC address of the target device.

In step S604, the master device establishes a mapping relationship between identification information of the master device and identification information of the target device, and sends the mapping relationship and an association contact to the server.

The master device scans for a surrounding unbound device, selects the unbound device to bind to, and establishes a mapping relationship between identification information of the target device and identification information of the master device. After binding is successful, the master device sends the mapping relationship and an association contact to the server. On the other hand, the master device may send a binding success message to the target device through a Bluetooth message. After receiving the binding success message, the target device may set a binding state of the target device to "bound".

In step S606, the server stores the mapping relationship and the association contact sent by the master device.

After receiving the mapping relationship and the association contact sent by the master device, the server may store the mapping relationship and the association contact.

In step S608, the master device determines that the target device loses contact.

In the embodiment, if the master device determines that the master device has not acquired positioning information of the target device within a consecutive duration t, where t is greater than a preset duration T, the master device can determine that the target device loses contact. In some situations, it may be that the user on the master device side first discovers that the target device loses contact, and then sends an instruction to the master device through an input unit of the master device to notify the master device that the target device has lost contact. For example, if the target device is a pet tracker, and the user on the master device side cannot find the pet of the user and cannot know the real-time position of the pet tracker from the master device, the user can determine that the pet tracker has lost contact.

In step S610, the master device sends help-seeking information to the server.

After determining that the target device is in a contact-loss state, the master device may send help-seeking information to the server. In the embodiment, the help-seeking information may carry both a range indication and an urgency degree indication. In the embodiment, since the master device is associated with only one device, the help-seeking information sent by the master device to the server may not include the identification information of the target device.

In step S612, the server determines the to-be-positioned target device according to the help-seeking information.

After receiving the help-seeking information, the server may first determine which device the help-seeking information requests to position, that is, determine which target device the help-seeking information corresponds to.

In the embodiment, the server may directly query the mapping relationship stored in the server according to the sending end of the help-seeking information. If more than two associated devices are found out, the server may acquire identification information in the help-seeking information, and determine which target device of the master device side actually needs to be positioned according to the identification information. If only one associated device is found out, the only one associated device is the target device.

In step S614, the server queries a last position of the target device before the target device loses contact.

After the target device is found out, the server may further find out the positioning information reported by the target device for the last time, and determine the last position of the target device before the target device loses contact according to the positioning information.

In step S616, the server determines an assistance scan range.

Since the help-seeking information sent by the master device to the server contains a range indication, the server may determine a scan range according to the range indication and the last position obtained by the query of the server. For example, if the range indication is that r = 1 km, the server will determine a circular region with the last position as the center and the radius of 1 km as the assistance scan range.

In step S618, the server sends an assistance positioning instruction to an assistance terminal within the assistance scan range.

The server may send an assistance positioning instruction to an assistance terminal within the assistance scan range, and the assistance positioning instruction includes both the ID of the target device and the MAC address of the target device.

In step S620, the assistance terminal scans for a surrounding device.

After receiving the assistance positioning instruction sent by the server, the assistance terminal may scan for a device surrounding the assistance terminal to acquire the ID and MAC address of the scanned device. In the embodiment, the scan strategy of the assistance terminal is determined by the assistance terminal side. However, in some other examples of the embodiment, the server may indicate a scan strategy to the assistance terminal through an assistance scan instruction.

In step S622, the assistance terminal positions a position of the assistance terminal when the target device is scanned.

After a device is scanned by the assistance terminal, the assistance terminal may first compare the ID of the device with the ID carried in the assistance positioning instruction. If the two are consistent with each other, the assistance terminal matches the MAC address of the scanned device with the MAC address in the assistance positioning instruction. If the two successfully match each other, the assistance terminal may determine that the assistance terminal has successfully scanned the target device. Therefore, the assistance terminal immediately positions the current position of the assistance terminal and obtains positioning information.

In step S624, the assistance terminal sends the positioning information to the server.

After obtaining the positioning information, the assistance terminal may send the positioning information to the server.

In step S626, the server sends the positioning information to the master device.

After receiving the positioning information, the server may send the positioning information to the master device.

In an example of the embodiment, the assistance terminal carries the positioning information of the assistance terminal at a scan success time in scan success information and sends the scan success information to the server. After receiving the scan success information, the server not only sends the positioning information to the master device, but also, to improve the probability that the user on the master device side can acquire the positioning information of the target device in time, may send the association contact of the master device side to the assistance terminal, so that the assistance terminal notifies the master device of the current approximate position of the target device through the association contact. Whether the assistance terminal notifies the master device through the association contact may be set by a user on the assistance terminal side. If the user on the assistance terminal side does not agree, even if the assistance terminal acquires the association contact of the master device from the server, the assistance terminal does not need to contact the master device.

According to the device positioning method provided by the embodiment, after the target device loses contact, other terminals may be used to scan for and position the target device, so as to determine the position of the target device and end the contact-loss state of the target device. In this way, the stability of the process of the master device tracking the position of the target device is improved, the personal and property safety of the target device side is ensured, and the experience of the user is improved.

### Embodiment three

In the device positioning method provided by the preceding embodiments, the master device initiates the process of scan and positioning on the contact-loss target device. Only when the master device successfully sends the help-seeking information to the server can the server be triggered to instruct the assistance terminal to position the target device through the assistance positioning instruction. However, in some cases, the target device may discover the contact loss situation earlier than the master device. For example, the value of a preset duration T set by the master device is relatively large, so that the master device has not yet discovered that the target device loses contact; however, if the target device determines that the SIM card of the target device cannot successfully register with the NB-IoT network, or the target device determines that the target device cannot successfully report the current positioning information of the target device to the server, the target device can immediately determine that the target device loses contact with the master device currently. After the target device loses contact with the master device, the target device may also be forced to move. For example, if the target device is a pet tracker, the pet will not stop moving due to the contact loss of the pet tracker. Therefore, in these situations, if waiting for the master device to discover that the target device loses contact and then to request the server to activate an assistance terminal to scan for and position, the target terminal may have already been far away from the position reported to the server before the target device loses contact. As a result, it is difficult for the assistance terminal to scan for, and thus the possibility that people or articles on the target device side lose contact increases.

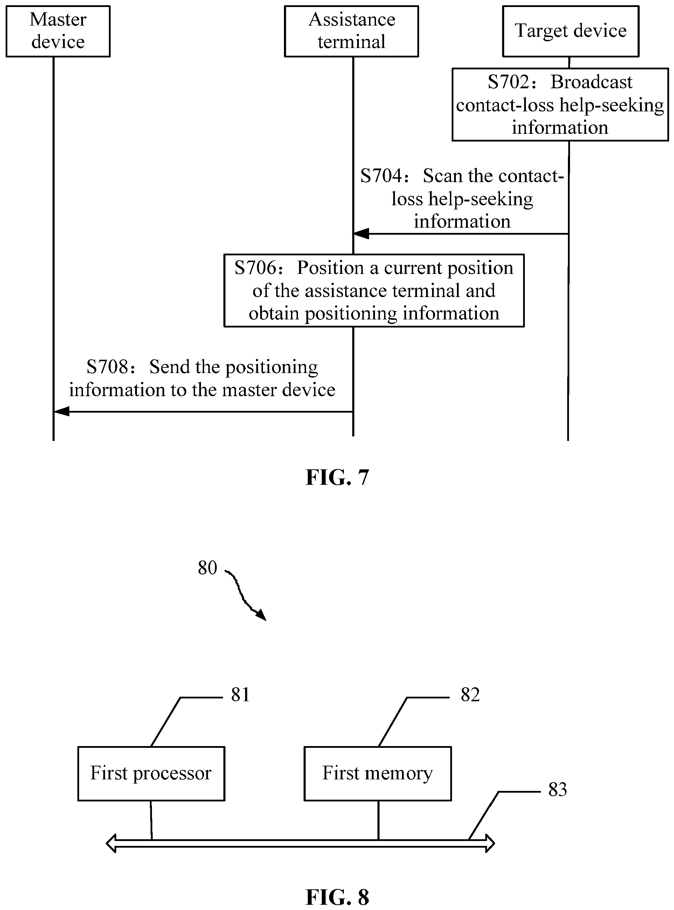

Therefore, the embodiment provides a device positioning method in which the help-seeking information is initiated by the target device side. Reference may be made to the interaction flowchart shown in FIG. 7.

In step S702, a target device broadcasts contact-loss help-seeking information.

In the embodiment, the target device is provided with a BLE module. For the BLE module, four common operating modes of the Bluetooth module are provided.

### (1) Host mode

The BLE module operating in the host mode may search for surrounding devices and select a slave that needs to be connected to connect, and then may send and receive data. In some examples of the embodiment, the BLE module may be set to connect to an MAC address of a slave by default, so that the BLE module can search for the slave module and connect to the slave module as soon as the BLE module is powered on.

### (2) Slave mode

The BLE module operating in this mode can only be searched for by the host, and cannot actively search. After being connected to the host, the BLE module may also send and receive data with the host device.

### (3) Broadcast mode

In this mode, the BLE module may perform one-to-many broadcast. A user may set data broadcast by the BLE module through AT commands, and the BLE module may continuously broadcast in a low-power-consumption mode. This mode may be applied to applications with extremely low power consumption, small data volume and one-way transmission, such as beacons, billboards, indoor positioning and material tracking.

### (4) Wireless mesh network networking mode

In this mode, multiple modules may be simply added to the network. Through the star network and relay technology, each network may connect more than 65,000 nodes. Networks may also be interconnected, and finally countless BLE modules may be connected to each other or directly controlled via mobile phones or tablets. Moreover, in this mode, no gateway is required. Even if a fault occurs in one device, the one device will be skipped, and the closest device is selected for transmission. In the entire networking process, the device only needs to be powered on and be set with a communication password to achieve automatic networking, so that simple interconnection is truly achieved.

In the embodiment, after determining that the target device loses contact with a master device, the target device may operate in the broadcast mode and broadcast contact-loss help-seeking information to surrounding devices. The contact-loss help-seeking information includes identification information of the target device. For example, the identification information may be at least one of the ID or MAC address of the target device.

In step S704, the contact-loss help-seeking information is scanned by an assistance terminal.

In the preceding embodiments, the assistance terminal needs to receive an assistance positioning instruction sent by a server before starting scanning for a surrounding device. Moreover, the scan of the assistance terminal is purposeful and is to scan the target device specified in the assistance positioning instruction. Different from the preceding embodiments, the scan of the assistance terminal in the embodiment does not need to be triggered by the instruction of the server side. For the assistance terminal, the assistance terminal may scan at any time, regardless of whether a target device loses contact currently. This is only to ensure that the assistance terminal can provide help when a device loses contact and needs help.

Therefore, if some assistance terminals among terminals currently relatively close to the target device have already started scanning, the contact-loss help-seeking information broadcast by the target device will be received by one or more assistance terminals. For an assistance terminal that scans the contact-loss help-seeking information, after receiving the contact-loss help-seeking information, the assistance terminal may determine that one target device has currently lost contact with the master device corresponding to the one target device and needs to be helped. In addition, the assistance terminal may further determine the identification information of the target device according to the contact-loss help-seeking information.

In step S706, the assistance terminal positions a current position of the assistance terminal and obtains positioning information.

When the contact-loss help-seeking information is scanned, the assistance terminal may determine a current position of the assistance terminal, so as to obtain positioning information at a scan success time. Since the target device is scanned by the assistance terminal through a short-distance scan manner such as Bluetooth, the position of the assistance terminal when the contact-loss help-seeking information is scanned is very close to the position of the target device at the same time, and the positioning information of the assistance terminal at the time can basically characterize the position of the target device.

In step S708, the assistance terminal sends the positioning information to the master device.

In the embodiment, the assistance terminal may also send the positioning information to the master device in two manners.

In manner one, the assistance terminal sends the positioning information to the master device through the server. After acquiring the positioning information at the scan success time, the assistance terminal may send the positioning information and the identification information of the target device to the server. After acquiring the positioning information and the identification information of the target device sent by the assistance terminal, the server may find out the master device corresponding to the target device according to the identification information of the target device and a mapping relationship between master devices and associated devices pre-stored in the server, and send the positioning information to the master device.

In manner two, the assistance terminal directly sends the positioning information to the master device.

After acquiring the positioning information at the scan success time, the assistance terminal may directly send the positioning information of the assistance terminal at the scan success time to the master device according to an association contact of the master device side without through forwarding by the server. The so-called association contact of the master device side may include at least one of a telephone number of the master device side, an email address of the master device side or the like. The assistance terminal may acquire the association contact of the master device side from the server, or may acquire the association contact of the master device from the target device.

The solution for the assistance terminal acquiring the association contact of the master device side from the target device side is first introduced. When the target device and the master device are associated with each other, the master device may send the association contact of the master device to the target device, so that the target device stores the association contact. The target device may carry the association contact of the master device side in the contact-loss help-seeking information broadcast by the target device. In this way, after the target device is successfully scanned by the assistance terminal, the assistance terminal may acquire the association contact of the master device side from the target device side. In some examples of the embodiment, the contact-loss help-seeking information broadcast by the target device side may not carry the association contact of the master device side. Instead, after the contact-loss help-seeking information is scanned by the assistance terminal, the assistance terminal communicates with the target device and requests the target device to send the association contact of the master device side stored in the target device to the assistance terminal. After receiving the request from the assistance terminal, the target device may send the association contact of the master device side to the assistance terminal.

Another way for the assistance terminal acquiring the association contact of the master device side is further introduced herein. The assistance terminal may acquire the association contact of the master device side from the server. In an example of the embodiment, after the contact-loss help-seeking information broadcast by the target device is successfully scanned by the assistance terminal, the assistance terminal may send scan success information to the server. The scan success information may characterize that the assistance terminal scans a device in a contact-loss state, and the scan success information carries the identification information of the target device in the contact-loss state.

After receiving the scan success information sent by the assistance terminal, the server may find out the master device corresponding to the target device according to the pre-stored mapping relationship, and send the association contact corresponding to the master device to the assistance terminal.

The master device may receive the positioning information of the assistance terminal at the scan success time directly sent by the assistance terminal, or receive the positioning information of the assistance terminal at the scan success time sent by the assistance terminal through the server. After obtaining the positioning information that can characterize the current position of the target device, the master device may display the position corresponding to the positioning information to the user on a map, so that the owner of the target device, that is, the user of the device, can know the current approximate position of the target device and can move to find the target device.

According to the device positioning method provided by the embodiment, after losing contact with the master device, the target device may actively initiate help seeking, so as to timely report the position of the target device to the server or send the position of the target device to the master device side by utilizing surrounding assistance terminals. In this way, the positioning flow of the target device after the target device loses contact is improved, the property and personal safety of the target device side is improved, the impact of the contact loss of the target device on the user on the master device side is reduced, and the experience of the user is improved.

### Embodiment four

The embodiment provides a storage medium. The storage medium may store one or more computer programs that can be read, compiled and executed by one or more processors. In the embodiment, the storage medium may store at least one of a first device positioning program, a second device positioning program or a third device positioning program. The first device positioning program may be executed by one or more processors to implement the flow on the master device side in any one of the device positioning methods introduced in embodiment one and embodiment two. The second device positioning program may be executed by one or more processors to implement the flow on the serve side in any one of the device positioning methods introduced in embodiment one and embodiment two. The third device positioning program may be executed by one or more processors to implement the flow on the assistance terminal side in any one of the device positioning methods introduced in embodiment one and embodiment two.

For one terminal, in some cases, the terminal needs to serve as a master device, but in other situations, the terminal may also serve as an assistance terminal. Therefore, in some examples of the embodiment, one storage medium may simultaneously store the first device positioning program and the second device positioning program.

In addition, the embodiment provides a terminal. As shown in FIG. 8, a terminal 80 includes a first processor 81, a first memory 82 and a first communication bus 83 configured to connect the first processor 81 and the first memory 82. The first memory 82 may be a preceding storage medium storing at least one program of the first device positioning program or the second device positioning program. The first processor 81 may read the first device positioning program, compile and execute the flow on the master device side in the device positioning method introduced in the preceding embodiments.

The first processor 81 sends help-seeking information to a server, and the help-seeking information instructs the server to send an assistance positioning instruction to an assistance terminal within an assistance scan range, and the assistance terminal is instructed to scan for a target device associated with the terminal 80.

The first processor 81 acquires positioning information of the assistance terminal at a scan success time, and the scan success time is a time when the target device is scanned by the assistance terminal according to the assistance positioning instruction.

The first processor 81 acquiring the positioning information of the assistance terminal at the scan success time may be implemented by receiving the positioning information of the assistance terminal at the scan success time directly sent by the assistance terminal; or may be implemented by receiving the positioning information of the assistance terminal at the scan success time sent by the server, and the positioning information is sent by the assistance terminal to the server.

In some examples of the embodiment, the help-seeking information includes at least one of a range indication or an urgency degree indication. The range indication is used for indicating a size of an area of the assistance scan range, and the urgency degree indication is used for characterizing an urgency degree of positioning the target device.

If the devices associated with the terminal 80 include more than one target device, the help-seeking information includes identification information of the target device.

In an example of the embodiment, before the first processor 81 sends the help-seeking information to the server, the following operations are further included: the terminal 80 is first associated with the target device; the first processor 81 establishes a mapping relationship between the first processor 81 and the target device based on the identification information of the target device; then, the first processor 81 sends the mapping relationship to the server.

After the terminal 80 is associated with the target device, the first processor 81 may further send an association contact of the terminal 80 to the target device and/or the server.

The first processor 81 executes the first device positioning program to implement the process of the flow on the master device side in the device positioning method. Reference may be made to the introduction of the preceding embodiments, which is not repeated herein.

The first processor 81 may read the second device positioning program, compile and execute the flow on the assistance terminal side in the device positioning method introduced in the preceding embodiments.

The first processor 81 receives the assistance positioning instruction sent by the server, and the assistance positioning instruction contains the identification information of the target device that loses contact with the master device. Then, the first processor 81 scans for a surrounding device and matches the scanned identification information with the identification information of the target device. If matching is successful, the first processor 81 positions a current position of the terminal 80 to obtain positioning information, and then the first processor 81 sends the positioning information to the master device.

In an example of the embodiment, the first processor 81 sends the positioning information to the server, and the positioning information is sent to the master device by the server.

In another example of the embodiment, the first processor 81 directly sends the positioning information to the master device according to the acquired association contact of the master device.

Optionally, before directly sending the positioning information to the master device according to the acquired association contact of the master device, the first processor 81 may acquire the association contact of the master device from the server, or acquire the association contact of the master device from the master device.

The first processor 81 executes the second device positioning program to implement the process of the flow on the assistance terminal side in the device positioning method. Reference may be made to the introduction of the preceding embodiments, which is not repeated herein.

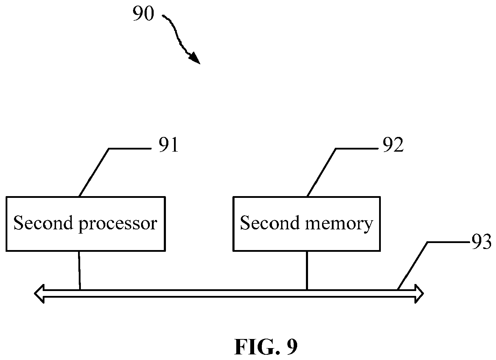

The embodiment further provides a server. As shown in FIG. 9, a server 90 includes a second processor 91, a second memory 92 and a second communication bus 93 configured to connect the second processor 91 and the second memory 92. The second memory 92 may be a preceding storage medium storing at least one program of the second device positioning program or the third device positioning program. The second processor 91 may read the third device positioning program, compile and execute the flow on the server side in the device positioning method introduced in the preceding embodiments.

The second processor 91 receives help-seeking information sent by the master device. The help-seeking information is used for instructing the server 90 to send an assistance positioning instruction to an assistance terminal within an assistance scan range, and instructing the assistance terminal to scan for a target device associated with the master device and currently in a contact-loss state.

The second processor 91 sends the assistance positioning instruction to the assistance terminal and instructs the assistance terminal to scan for the target device and send positioning information of the assistance terminal at a scan success time to the master device. The assistance positioning instruction contains identification information of the target device.

In an example of the embodiment, before determining the assistance scan range according to a last position of the target device before the target device loses contact, the second processor 91 first searches for an associated device corresponding to the master device from a stored mapping relationship as the target device. Master devices are in one-to-one correspondence with associated devices in the mapping relationship.

In another example of the embodiment, the second processor 91 determines the target device according to identification information carried in the help-seeking information.

In some examples of the present embodiment, before sending the assistance positioning instruction to the assistance terminal, the second processor 91 first determines the assistance scan range according to the last position of the target device before the target device loses contact, and then sends the assistance positioning instruction only to the assistance terminal currently within the assistance scan range.

Optionally, the help-seeking information may include a range indication for indicating a size of an area of the assistance scan range. When determining the assistance scan range, the second processor 91 may first determine the last position of the target device before the target device loses contact, and then determine a region centered on the last position and having an area satisfying a requirement of the range indication as the assistance scan range.

In some examples, after sending the assistance positioning instruction to the assistance terminal currently within the assistance scan range, the second processor 91 may further receive the positioning information at the scan success time sent by the assistance terminal. Then, the second processor 91 sends the positioning information to the master device.

In some examples, after sending the assistance positioning instruction to the assistance terminal currently within the assistance scan range, the second processor 91 may further receive scan success information sent by the assistance terminal, and the scan success information characterizes that the target device is successfully scanned by the assistance terminal. After receiving the scan success information, in some examples, the second processor 91 sends an association contact of the master device to the assistance terminal, so that the assistance terminal sends the positioning information at the scan success time to the master device through the association contact.

The second processor 91 executes the third device positioning program to implement the process of the flow on the server side in the device positioning method. Reference may be made to the introduction of the preceding embodiments, which is not repeated herein.

According to the terminal and sever provided by the embodiment, after the target device loses contact with the master device, the master device may send the help-seeking information to the server, then the server initiates the flow of finding and positioning the target device, and the assistance terminal close to the last position of the target device before the target device loses contact is utilized to scan for and position the target device, so as to find the target device. According to the device positioning solution, the positioning flow of the target device after the target device loses contact is improved, the property and personal safety of the target device side is improved, the impact of the contact loss of the target device on the user on the master device side is reduced, and the experience of the user is improved.

If not in collision, features in various embodiments of the present disclosure may be combined with each other.

Some or all steps of the preceding method and function modules/units in the preceding system or apparatus may be implemented as software (which may be implemented by program codes executable by a computing apparatus), firmware, hardware and suitable combinations thereof. In the hardware implementation, the division of the function modules/units in the preceding description may not correspond to the division of physical components. For example, one physical component may have multiple functions, or one function or step may be performed jointly by multiple physical components. Some or all physical components may be implemented as software executed by a processor such as a central processing unit, a digital signal processor or a microprocessor, may be implemented as hardware, or may be implemented as integrated circuits such as application-specific integrated circuits. Such software may be distributed on a computer-readable medium and executed by a computing apparatus. Moreover, in some cases, the steps illustrated or described herein may be performed in a sequence different from the sequence described herein. The computer-readable medium may include a computer storage medium (or a non-transitory medium) and a communication medium (or a transitory medium). The computer storage medium includes a volatile and nonvolatile as well as removable and non-removable medium implemented in any method or technology for storage of information (such as computer-readable instructions, data structures, program modules or other data). The computer-storage medium includes, but is not limited to, a random access memory (RAM), a read-only memory (ROM), an electrically erasable programmable read-only memory (EEPROM), a flash memory or other memory technologies, a compact disc read-only memory (CD-ROM), a digital video disk (DVD) or another optical disc storage, a magnetic cassette, a magnetic tape, disk storage or another magnetic storage apparatus, or any other medium that may be used for storing desired information and accessed by a computer. The communication medium generally includes computer-readable instructions, data structures, program modules or other data in a modulated data signal such as carriers or other transport mechanisms, and may include any information delivery medium. Therefore, the present disclosure is not limited to any particular combination of hardware and software.

## Claims

1. A device positioning method, comprising:
sending, by a master device, help-seeking information to a server, wherein the help-seeking information is used for triggering sending of an assistance positioning instruction to an assistance terminal, such that the assistance terminal is instructed to scan for a target device associated with the master device; and
acquiring, by the master device, positioning information of the assistance terminal at a scan success time, wherein the scan success time is a time when the target device is scanned by the assistance terminal according to the assistance positioning instruction.

2. The device positioning method according to claim 1, wherein acquiring, by the master device, the positioning information of the assistance terminal at the scan success time comprises:
receiving, by the master device, first positioning information of the assistance terminal at the scan success time directly sent by the assistance terminal; or
receiving, by the master device, second positioning information of the assistance terminal at the scan success time sent by the server, wherein the second positioning information is sent by the assistance terminal to the server.

3. The device positioning method according to claim 1 or 2, wherein the help-seeking information comprises at least one of a range indication or an urgency degree indication, wherein the range indication is used for indicating a size of an area of an assistance scan range, and the urgency degree indication is used for characterizing an urgency degree of positioning the target device.

4. The device positioning method according to claim 1 or 2, wherein in a case where devices associated with the master device comprise not only the target device, the help-seeking information comprises identification information of the target device.

5. The device positioning method according to claim 1 or 2, before sending, by the master device, the help-seeking information to the server, further comprising:
associating the master device with the target device;
establishing, by the master device, based on identification information of the target device, a mapping relationship between the master device and the target device; and
sending, by the master device, the mapping relationship to the server.

6. The device positioning method according to claim 5, after associating the master device with the target device, further comprising:
sending, by the master device, an association contact of the master device to at least one of the target device or the server.

7. A device positioning method, comprising:
receiving, by a server, help-seeking information sent by a master device; and
sending, by the server, an assistance positioning instruction to an assistance terminal, wherein the assistance positioning instruction comprises identification information of a target device associated with the master device, and the assistance positioning instruction is configured to instruct the assistance terminal to scan for the target device and send positioning information of the assistance terminal at a scan success time to the master device.

8. The device positioning method according to claim 7, before sending, by the server, the assistance positioning instruction to the assistance terminal, further comprising:
searching for, by the server, an associated device corresponding to the master device from a stored mapping relationship as the target device, wherein master devices are in one-to-one correspondence with associated devices in the mapping relationship; or
determining, by the server, the target device according to the identification information of the target device carried in the help-seeking information.

9. The device positioning method according to claim 7, before sending, by the server, the assistance positioning instruction to the assistance terminal, further comprising:
determining, by the server, an assistance scan range according to a last position of the target device before the target device loses contact;
wherein sending, by the server, the assistance positioning instruction to the assistance terminal comprises:
sending, by the server, the assistance positioning instruction to an assistance terminal currently located within the assistance scan range.

10. The device positioning method according to claim 9, wherein the help-seeking information comprises a range indication, wherein the range indication is used for indicating a size of an area of the assistance scan range; and
wherein determining, by the server, the assistance scan range according to the last position of the target device before the target device loses contact comprises:
determining, by the server, a region centered on the last position and having an area satisfying a requirement of the range indication as the assistance scan range.

11. The device positioning method according to any one of claims 7 to 10, after sending, by the server, the assistance positioning instruction to the assistance terminal, further comprising:
receiving, by the server, the positioning information at the scan success time sent by the assistance terminal; and
sending, by the server, the positioning information to the master device.

12. The device positioning method according to any one of claims 7 to 10, after sending, by the server, the assistance positioning instruction to the assistance terminal, further comprising:
receiving, by the server, scan success information sent by the assistance terminal, wherein the scan success information characterizes that the target device is successfully scanned by the assistance terminal; and
sending, by the server, an association contact of the master device to the assistance terminal, wherein the association contact is used by the assistance terminal to directly send the positioning information at the scan success time to the master device.

13. A device positioning method, comprising:
receiving, by an assistance terminal, an assistance positioning instruction sent by a server, wherein the assistance positioning instruction comprises identification information of a target device associated with a master device;
scanning for, by the assistance terminal, a surrounding device, and matching identification information of a scanned surrounding device with the identification information of the target device;
in response to matching being successful, positioning, by the assistance terminal, a current position of the assistance terminal to obtain positioning information; and
sending, by the assistance terminal, the positioning information to the master device.

14. The device positioning method according to claim 13, wherein sending, by the assistance terminal, the positioning information to the master device comprises:
sending, by the assistance terminal, the positioning information to the server, and sending, by the server, the positioning information to the master device; or
directly sending, by the assistance terminal, the positioning information to the master device according to an acquired association contact of the master device.

15. The positioning method according to claim 14, before directly sending, by the assistance terminal, the positioning information to the master device according to the acquired association contact of the master device, further comprising:
acquiring, by the assistance terminal, the association contact of the master device from the server; or
acquiring, by the assistance terminal, the association contact of the master device from the target device.

16. A terminal, comprising a processor, a memory and a communication bus, wherein
the communication bus is configured to implement connection and communication between the processor and the memory; and
the processor is configured to execute a first device positioning program stored in the memory to implement the device positioning method of any one of claims 1 to 6; or the processor is configured to execute a second device positioning program stored in the memory to implement the device positioning method of any one of claims 13 to 15.

17. A server, comprising a processor, a memory and a communication bus, wherein
the communication bus is configured to implement connection and communication between the processor and the memory; and
the processor is configured to execute a device positioning program stored in the memory to implement the device positioning method of any one of claims 7 to 12.

18. A storage medium, storing at least one of: a first device positioning program, a second device positioning program or a third device positioning program, wherein the first device positioning program is capable of being executed by one or more processors to implement the device positioning method of any one of claims 1 to 6; the second device positioning program is capable of being executed by one or more processors to implement the device positioning method of any one of claims 7 to 12; and the third device positioning program is capable of being executed by one or more processors to implement the device positioning method of any one of claims 13 to 15.
